# FASCICULE DE BREVET EUROPEEN

(11) **EP 3 361 071 B1**
(45) Date de publication et mention de la délivrance du brevet: **27.03.2019**
(21) Numéro de dépôt: 18153792.9
(22) Date de dépôt: 29.01.2018
(51) Int. Cl.: F02C 7/045, F02C 7/05, B64D 33/02

(54) **STRUCTURE D'ENTRÉE D'AIR POUR UNE NACELLE D'AÉRONEF**
LUFTEINLASSSTRUKTUR FÜR LUFTFAHRZEUGGONDEL
AIR INTAKE STRUCTURE FOR AN AIRCRAFT NACELLE

(30) Priorité: 10.02.2017 FR 1751105
(43) Date de publication de la demande: 15.08.2018
(73) Titulaire: Airbus Operations S.A.S., 31060 Toulouse (FR); Airbus (S.A.S.), 31700 Blagnac (FR)
(72) Inventeur: PORTE, Alain, 31770 Colomiers (FR); OUNDJIAN, Franck, 31470 Bonrepos sur Aussonnelle (FR); LALANE, Jacques, 31650 Saint Orens de Gameville (FR)
(74) Mandataire: Gicquel, Olivier Yves Gérard

(56) Documents cités:
- EP-A1- 1 013 910
- US-A1- 2010 314 082

## Description

La présente invention concerne une structure d'entrée d'air pour une nacelle d'aéronef, une nacelle d'aéronef comportant une telle structure d'entrée, ainsi qu'un aéronef comportant au moins une telle nacelle.

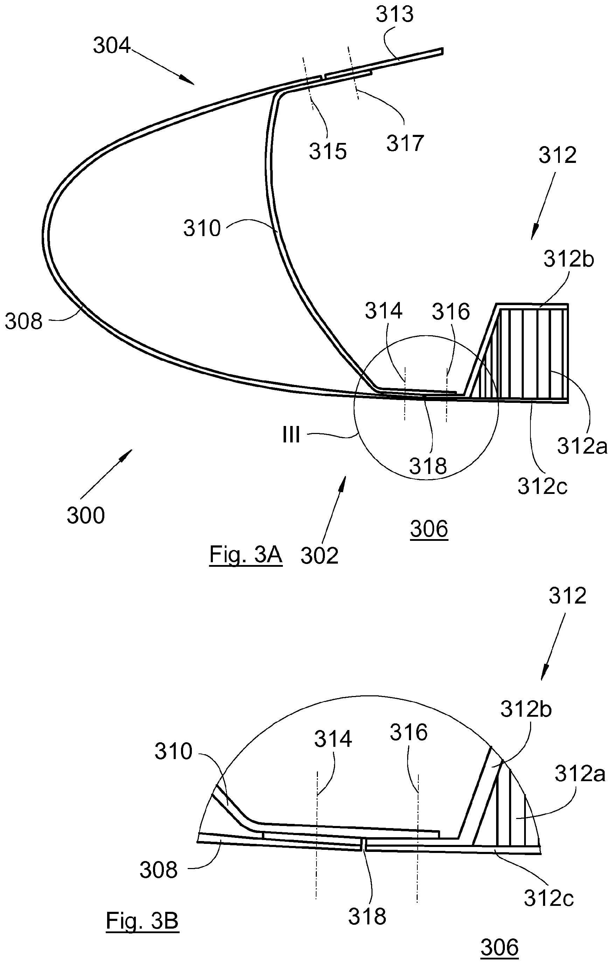

Un moteur d'aéronef comprend une nacelle dans laquelle est logé le moteur proprement dit. La nacelle qui prend une forme annulaire présente à l'avant une structure d'entrée d'air 300 dont une coupe est représentée sur la Fig. 3A.

Par convention, les termes "avant" et "arrière" sont utilisés dans l'ensemble du texte en prenant pour référence l'avant et l'arrière du moteur.

La structure d'entrée d'air 300 comprend globalement une face intérieure 302 et une face extérieure 304 en contact avec l'air extérieur, tandis que la face intérieure 302 délimite une veine 306 qui constitue le canal de soufflante.

La structure d'entrée d'air a notamment pour fonction d'assurer l'écoulement aérodynamique de l'air, d'une part, vers le canal de soufflante 306 et, d'autre part, vers l'extérieur de la nacelle.

La structure d'entrée d'air 300 comprend une lèvre d'entrée d'air 308, un cadre de renfort avant 310, un panneau acoustique 312 et un panneau extérieur 313.

La lèvre d'entrée d'air 308 présente en section la forme d'un U ouvert vers l'arrière. Elle forme l'enveloppe extérieure de la partie avant de la structure d'entrée d'air 300 et elle assure le partage de l'air entre la partie qui pénètre dans le canal de soufflante 306 et la partie qui s'écoule autour de la nacelle.

Le cadre de renfort avant 310 présente également en section la forme d'un U ouvert vers l'arrière et il est placé à l'intérieur et à l'arrière de la lèvre d'entrée d'air 308. Le cadre de renfort avant 310 assure la tenue mécanique de la partie avant de la nacelle et aide à en préserver la forme et le dimensionnement.

Le panneau extérieur 313 prolonge la lèvre d'entrée d'air 308 du côté extérieur et constitue une partie de la face extérieure 304.

Le panneau acoustique 312 forme l'enveloppe intérieure de la nacelle, en arrière de la lèvre d'entrée d'air 308, du côté du canal de soufflante 306. Le panneau acoustique 312 constitue donc une partie de la face intérieure 302.

Le panneau acoustique 312 présente une structure propre à atténuer les bruits produits par le moteur et notamment par la soufflante. Ce panneau acoustique 312 est de type composite sandwich, et il intègre une âme en nid d'abeilles 312a entre une paroi intérieure 312c et une paroi extérieure 312b. La paroi intérieure 312c délimite le canal de soufflante 306 et prolonge la lèvre d'entrée d'air 308, tandis que la paroi extérieure 312b est à l'intérieur de la structure d'entrée d'air 300 mais orientée vers l'extérieur de la nacelle.

La partie avant du panneau acoustique 312 est dépourvue d'âme en nid d'abeilles, et la paroi intérieure 312c et la paroi extérieure 312b sont alors accolées l'une contre l'autre.

Du côté de la face intérieure 302, le cadre de renfort avant 310 est fixé, d'une part, à la lèvre d'entrée d'air 308 par exemple par l'intermédiaire de rivets 314 symbolisés par un trait mixte, et, d'autre part, au panneau acoustique 312 au niveau de sa partie avant, par exemple par l'intermédiaire de rivets 316 symbolisés par un trait mixte.

Du côté de la face extérieure 304, le cadre de renfort avant 310 est fixé, d'une part, à la lèvre d'entrée d'air 308 par exemple par l'intermédiaire de rivets 315, et, d'autre part, au panneau extérieur 313 par l'intermédiaire de rivets 317.

Bien qu'une telle structure d'entrée d'air 300 donne entière satisfaction lors de son utilisation, elle présente des inconvénients pour sa maintenance. En effet, dans l'assemblage, l'extrémité arrière de la lèvre d'entrée d'air 308 et l'extrémité avant de la paroi intérieure 312c sont en regard, mais du fait des tolérances de construction, ces deux extrémités sont à distance l'une de l'autre, créant ainsi un trou 318 entre elles. La Fig. 3B montre un agrandissement de la zone III de la Fig. 3A.

Le trou 318 est soumis au flux d'air qui pénètre dans le canal de soufflante 306 et qui transporte de l'eau et des poussières. Pour éviter que ces éléments (eau, poussières) s'agglutinent dans le trou 318, il est nécessaire de fixer un élément obturant qui bouche le trou 318. Cet élément obturant est par exemple un joint ou une lamelle fixée à l'intérieur du canal de soufflante 306.

Lors de la maintenance de la nacelle, il est alors nécessaire de retirer cet élément obturant, éventuellement de le remplacer, puis de le remettre en place ce qui engendre un délai de maintenance plus important.

Le document brevet US2010/314082 décrit une solution à ce problème en proposant une structure d'entrée d'air dont le temps de maintenance est réduit.

L'invention vise à proposer une structure d'entrée d'air de conception alternative à celle présentée dans le document susmentionné. A cet effet, l'invention concerne une structure d'entrée d'air telle que revendiquée dans la revendication 1.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef présentant une structure d'entrée d'air selon l'invention,
la Fig. 2 est une vue en coupe d'une structure d'entrée d'air selon l'invention,
la Fig. 3A est une vue en coupe d'une structure d'entrée d'air d'un aéronef de l'état de la technique, et
la Fig. 3B est un agrandissement de la zone III de la Fig. 3A.

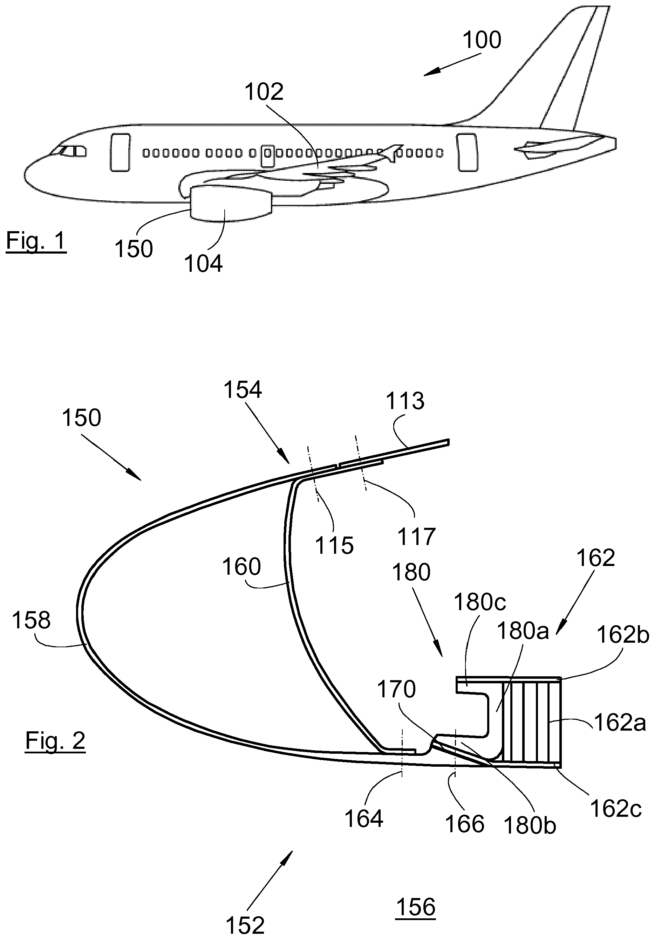

La Fig. 1 montre un aéronef 100 qui présente une aile 102 et sous l'aile une nacelle 104 dans laquelle est logé un moteur.

L'avant de la nacelle 104 présente une structure d'entrée d'air 150 dont une coupe est représentée sur la Fig. 2.

Comme pour la structure d'entrée d'air 300 de l'état de la technique, la structure d'entrée d'air 150 selon l'invention comprend une face intérieure 152 et une face extérieure 154 en contact avec l'air extérieur, tandis que la face intérieure 152 délimite une veine 156 qui constitue le canal de soufflante.

La structure d'entrée d'air 150 comprend, entre autres, une lèvre d'entrée d'air 158, un panneau acoustique 162 et un panneau extérieur 113.

Comme pour l'état de la technique, la lèvre d'entrée d'air 158 présente en section la forme d'un U ouvert vers l'arrière, forme l'enveloppe extérieure de la partie avant de la structure d'entrée d'air 150 et assure le partage de l'air.

Le panneau extérieur 113 prolonge la lèvre d'entrée d'air 158 du côté extérieur et constitue une partie de la face extérieure 154.

Le panneau acoustique 162 forme également l'enveloppe intérieure de la nacelle 104, en arrière de la lèvre d'entrée d'air 158, du côté du canal de soufflante 156. Le panneau acoustique 162 constitue donc une partie de la face intérieure 152.

Le panneau acoustique 162 est de type composite sandwich, et il intègre une âme en nid d'abeilles 162a entre une paroi intérieure 162c et une paroi extérieure 162b. La paroi intérieure 162c délimite le canal de soufflante 156 et prolonge la lèvre d'entrée d'air 158, tandis que la paroi extérieure 162b est à l'intérieur de la structure d'entrée d'air 150 mais orientée vers l'extérieur de la nacelle 104.

La partie avant du panneau acoustique 162 est dépourvue d'âme en nid d'abeilles mais la paroi intérieure 162c et la paroi extérieure 162b restent distantes l'une de l'autre.

La lèvre d'entrée d'air 158 présente à son extrémité arrière une surface de contact 170 qui est orientée vers l'intérieur de la lèvre d'entrée d'air 158 et qui prend donc la forme d'une couronne ou d'une portion de couronne autour de l'axe de la nacelle 104.

La paroi intérieure 162c se plaque contre la surface de contact 170, et la lèvre d'entrée d'air 158 reste du côté du canal de soufflante 156 par rapport à la paroi intérieure 162c. C'est-à-dire qu'au niveau de la jonction entre la lèvre d'entrée d'air 158 et la paroi intérieure 162c, et en progressant du canal de soufflante 156 vers l'extérieur, on trouve la lèvre d'entrée d'air 158, la surface de contact 170, puis la paroi intérieure 162c.

Au niveau de la surface de contact 170, la lèvre d'entrée d'air 158 est fixée à la paroi intérieure 162c, par des premiers moyens de fixation 166 appropriés comme par exemple des rivets ou des systèmes vis/écrous. Les premiers moyens de fixation 166 sont symbolisés par un trait mixte.

En section, la surface de contact 170 prend la forme d'un biseau qui est orienté vers l'intérieur de la lèvre d'entrée d'air 158 et qui pointe vers l'arrière de la lèvre d'entrée d'air 158 et donc de la nacelle 104. En d'autres termes, la lèvre d'entrée d'air 158 s'amincit par l'intérieur de la lèvre d'entrée d'air 158 en progressant de l'avant vers l'arrière au niveau de la surface de contact 170.

A la pointe du biseau orienté vers l'arrière, la paroi intérieure 162c vient dans le prolongement de la lèvre d'entrée d'air 158 et il n'y a donc pas d'anfractuosité entre la paroi intérieure 162c et la lèvre d'entrée d'air 158 dans laquelle des poussières ou de l'eau pourraient s'agglutiner.

Il n'est alors plus nécessaire de prévoir un élément obturant et le temps de maintenance est réduit.

La structure d'entrée d'air 150 comprend un cadre de renfort avant 160 qui présente également ici en section la forme d'un U ouvert vers l'arrière et qui est placé à l'intérieur et à l'arrière de la lèvre d'entrée d'air 158. Le cadre de renfort avant 160 assure la tenue mécanique de la partie avant de la nacelle 104 et aide à en préserver la forme et le dimensionnement.

Du côté de la face intérieure 152, le cadre de renfort avant 160 est fixé à la lèvre d'entrée d'air 158 par exemple par l'intermédiaire de deuxièmes moyens de fixation 164 tels que des rivets et symbolisés par un trait mixte.

Du côté de la face extérieure 154, le cadre de renfort avant 160 est fixé, d'une part, à la lèvre d'entrée d'air 158 par exemple par l'intermédiaire de rivets 115, et, d'autre part, au panneau extérieur 113 par l'intermédiaire de rivets 117.

Selon l'invention, pour renforcer la rigidité du panneau acoustique 162, la structure d'entrée d'air 150 comprend un renfort 180 qui présente en section la forme d'un U ouvert vers l'avant. Le renfort 180 est réalisé par exemple en fibres de carbone.

Le renfort 180 présente un fond 180a, une première branche 180b et une deuxième branche 180c. Les branches 180b-c sont solidaires du fond 180a et sensiblement parallèles.

La première branche 180b vient en appui et se fixe contre la paroi intérieure 162c, prenant ainsi la paroi intérieure 162c en sandwich avec la surface de contact 170. Les premiers moyens de fixation 166 fixent alors ensemble la lèvre d'entrée d'air 158, la paroi intérieure 162c et la première branche 180b.

La paroi extérieure 162b vient en appui et se fixe contre la deuxième branche 180c.

Le fond 180a vient en appui et se fixe contre l'âme 162a et sa longueur est sensiblement égale à l'épaisseur de l'âme 162a.

La forme particulière du renfort 180 permet également d'assurer la planéité de la paroi extérieure 162b qui peut alors être réalisée automatiquement par exemple à l'aide d'un robot déposant des fibres de carbone.

La forme du renfort 180 du panneau acoustique ainsi que sa position au niveau de la surface de contact offrent une meilleure stabilité et une maintenance optimisée.

## Revendications

1. Structure d'entrée d'air (150) pour une nacelle (104) d'aéronef (100), ladite structure d'entrée d'air (150) comportant :
- une lèvre d'entrée d'air (158) à section en forme de U ouvert vers l'arrière, avec une extrémité arrière,
- un panneau acoustique (162) comprenant une paroi intérieure (162c),
la structure d'entrée d'air (150) étant **caractérisée en ce que** la lèvre d'entrée d'air (158) présente à son extrémité arrière une surface de contact (170) orientée vers l'intérieur de la lèvre d'entrée d'air (158), **en ce que** la surface de contact (170) prend la forme d'un biseau qui pointe vers l'arrière et contre lequel se plaque la paroi intérieure (162c), **en ce qu'**à la pointe du biseau, la paroi intérieure (162c) vient dans le prolongement de la lèvre d'entrée d'air (158), et **en ce qu'**au niveau de la surface de contact (170), la lèvre d'entrée d'air (158) est fixée à la paroi intérieure (162c) par des premiers moyens de fixation (166),
la structure d'entrée d'air (150) étant **caractérisée en ce que** le panneau acoustique (162) intègre une âme en nid d'abeilles (162a) entre la paroi intérieure (162c) et une paroi extérieure (162b), **en ce que** la structure d'entrée d'air (150) comporte un renfort (180) à section en U ouvert vers l'avant et présentant un fond (180a), une première branche (180b) et une deuxième branche (180c), **en ce que** la première branche (180b) vient en appui contre la paroi intérieure (162c), **en ce que** la paroi extérieure (162b) vient en appui contre la deuxième branche (180c), et **en ce que** le fond (180a) vient en appui et se fixe contre l'âme (162a).

2. Structure d'entrée d'air (150) selon la revendication 1, **caractérisée en ce qu'**elle comporte un cadre de renfort avant (160) placé à l'intérieur et à l'arrière de la lèvre d'entrée d'air (158) et fixé à la lèvre d'entrée d'air (158) par des deuxièmes moyens de fixation (164).

3. Nacelle (104) pour un moteur d'aéronef (100) et présentant une structure d'entrée d'air (150) selon l'une des revendications 1 ou 2.

4. Aéronef (100) comportant au moins une nacelle (104) selon la revendication précédente.

## Patentansprüche

1. Lufteinlassstruktur (150) für eine Gondel (104) eines Luftfahrzeugs (100), wobei die Lufteinlassstruktur (150) aufweist:
- eine Lufteinlasslippe (158) mit U-förmigem Querschnitt, der nach hinten offen ist, mit einem hinteren Ende,
- eine Akustikplatte (162), die eine Innenwand (162c) umfasst,
wobei die Lufteinlassstruktur (150) **dadurch gekennzeichnet ist, dass** die Lufteinlasslippe (158) an ihrem hinteren Ende eine Kontaktfläche (170) aufweist, die dem Inneren der Lufteinlasslippe (158) zugewandt ist, dadurch, dass die Kontaktfläche (170) die Form einer Schräge annimmt, welche nach hinten zeigt und an welche die Innenwand (162c) angedrückt wird, dadurch, dass an der Spitze der Schräge die Innenwand (162c) in der Verlängerung der Lufteinlasslippe (158) angeordnet ist, und dadurch, dass an der Kontaktfläche (170) die Lufteinlasslippe (158) an der Innenwand (162c) durch erste Befestigungsmittel (166) befestigt ist,
wobei die Lufteinlassstruktur (150) **dadurch gekennzeichnet ist, dass** in die Akustikplatte (162) ein Wabenkern (162a) zwischen der Innenwand (162c) und einer Außenwand (162b) integriert ist, dadurch, dass die Lufteinlassstruktur (150) eine Verstärkung (180) mit U-förmigem Querschnitt aufweist, die nach vorn offen ist und einen Boden (180a), einen ersten Schenkel (180b) und einen zweiten Schenkel (180c) aufweist, dadurch, dass der erste Schenkel (180b) an der Innenwand (162c) zur Anlage kommt, dadurch, dass die Außenwand (162b) am zweiten Schenkel (180c) zur Anlage kommt, und dadurch, dass der Boden (180a) an dem Kern (162a) zur Anlage kommt und befestigt ist.

2. Lufteinlassstruktur (150) nach Anspruch 1, **dadurch gekennzeichnet, dass** sie einen vorderen Verstärkungsrahmen (160) aufweist, der im Inneren der Lufteinlasslippe (158) und hinten an dieser angeordnet ist und an der Lufteinlasslippe (158) durch zweite Befestigungsmittel (164) befestigt ist.

3. Gondel (104) für einen Motor eines Luftfahrzeugs (100), die eine Lufteinlassstruktur (150) nach einem der Ansprüche 1 oder 2 aufweist.

4. Luftfahrzeug (100) welches wenigstens eine Gondel (104) nach dem vorhergehenden Anspruch aufweist.

## Claims

1. Air intake structure (150) for a nacelle (104) of an aircraft (100), said air intake structure (150) comprising:
- an air intake lip (158) with a U-shaped section which is open towards the rear, with a rear end,
- an acoustic panel (162) comprising an inner wall (162c),
the air intake structure (150) being **characterized in that** the air intake lip (158) has at its rear end a contact surface (170) oriented towards the inside of the air intake lip (158), **in that** the contact surface (170) takes the shape of a bevel which points towards the rear and against which the inner wall (162c) is placed, **in that** at the point of the bevel, the inner wall (162c) runs on from the air intake lip (158) and **in that** level with the contact surface (170), the air intake lip (158) is fixed to the inner wall (162c) by first fixing means (166), the air intake structure (150) being **characterized in that** the acoustic panel (162) incorporates a honeycomb core (162a) between the inner wall (162c) and an outer wall (162b), **in that** the air intake structure (150) comprises a reinforcement (180) which has a U-shaped section that is open towards the front and exhibiting a bottom (180a), a first branch (180b) and a second branch (180c), **in that** the first branch (180b) is supported against the inner wall (162c), **in that** the outer wall (162b) is supported against the second branch (180c) and **in that** the bottom (180a) is supported and fixed against the core (162a).

2. Air intake structure (150) according to Claim 1, **characterized in that** it comprises a front reinforcing frame (160) positioned on the inside and at the rear of the air intake lip (158) and fixed to the air intake lip (158) by second fixing means (164).

3. Nacelle (104) for an aircraft (100) engine exhibiting an air intake structure (150) according to one of Claims 1 and 2.

4. Aircraft (100) comprising at least one nacelle (104) according to the preceding claim.
